# EUROPEAN PATENT APPLICATION

(11) **EP 4 711 705 A1**
(43) Date of publication of application: **18.03.2026**
(21) Application number: 24199677.6
(22) Date of filing: 11.09.2024
(51) Int. Cl.: G01B 5/00, G01B 5/008, G01B 21/04, G01D 5/244

(54) **INLINE NON-CONTACT TEMPERATURE DETERMINATION OF A MOVING PART OF A CMM**

(71) Applicant: Hexagon Innovation Hub GmbH, 9435 Heerbrugg (CH)
(72) Inventor: KUNZ, Marcel, 9443 Widnau (CH); BURGSTALLER, Roland, 6973 Höchst (AT); ISELI, Claudio, 9434 Au (CH)
(74) Representative: Kaminski Harmann

(57) **Abstract**

The invention relates to a position encoder configured to provide a relative displacement data of a first member of a CMM with respect to a second member of the CMM. The encoder comprises a scale with a plurality of scale element positioned on the first member and a reader head positioned on the second member. The reader head is configured to acquire scale position data regarding the position of at least a part of the scale elements. The reader head further comprises a temperature sensor to acquire local temperature data regarding the scale. The displacement of the members is derived based on the scale position and local temperature data.

## Description

### FIELD OF THE INVENTION

The present invention relates to a method of determining a relative displacement of a first and second member of a multi-axis tool positioning system, particularly a coordinate measuring machine (CMM). The invention also relates to a corresponding encoder and a multi-axis tool positioning system.

### BACKGROUND OF THE INVENTION

CMMs are used in a variety of applications in quality management and quality assurance. CMMs include stationary-, portable- or mobile CMMs, also including laser trackers, laser scanners and total stations. Metrology robots, i.e., CMMs on mobile or airborne chassis further extends the applicability of the above instruments. For the present invention CMM is to be understood as an instrument configured to provide metrology grade coordinate data. Unless otherwise provided this definition covers both stationary and mobile instruments and both tactile and non-contact data acquisition methods.

One widespread example of a basic CMM is a three-axis system. E.g., DE 43 25 347 discloses such a system. Typically, such CMMs includes a base with a measuring table and a movable frame or moving table. From here on for reasons of conciseness, unless explicitly provided otherwise, only the embodiments with movable frame will be discussed in detail. However, owing to the substantial functional similarity, at least with respect to the present invention, the two arrangements nevertheless can be regarded as equivalent. I.e. any teaching is applicable to the movable table type design with corresponding minor adaptations. The workpieces might be positioned or mounted on the measuring table. The movable frame is mounted on the base such that it can move along a first axis. The frame comprises an arm mounted movably along a second axis. Typically, the second axis is perpendicular to the first axis. The probing element is mounted on the arm such that it can move along a third axis. The third axis is typically perpendicular to the first and second axes. This construction enables the steering of the probing element in all three dimensions allowing to measure relevant 3D coordinates of an object. Contemporary three-axis systems often comprise further components, e.g., stacked rotary tables, articulated or otherwise deflectable probes, to provide 5 degrees of freedom regarding the relative pose of the probing element and the workpiece. Throughout this document, unless expressly provided otherwise, position will be used to represent the 3D location, while pose represent a six-dimensional position and orientation information.

Another typical embodiment is the articulated arm coordinate measuring machine (AACMM). An AACMM comprises a stationary base and an arm with multiple arm segments connected by articulations. The articulations provide mobility to a movable end of the arm opposed to the base. Probing elements are attached to the movable end. Due to the design principles AACMM-s are less accurate than the above mentioned three- or five-axis system, however they offer higher flexibility. E.g., EP 2 916 099 B1 discloses such an AACMM instrument.

To achieve the required precision CMMs are often installed in dedicated metrology laboratories providing low vibration environment and strictly controlled temperature and humidity. The different moving members of the CMM are however acting as local heat sources. The local temperatures can thus deviate from the temperature set by the air conditioning. Moreover, owing to the movement of the members the spatial relationship between the component acting as the first member and such local heat sources might change.

Furthermore, the different components of the CMM must fulfill different requirements therefore typically they are formed of different materials. Granite parts are often used as guide members for the movable measuring slides of a coordinate measuring apparatus. Guide members based on high-strength metallic components or compound material are also possible. The scales required for position measurements of the measuring slides are, as a rule, made of glass or special steel-compound. The scales having incremental scale divisions and are attached to the guide members. The attachment might be such that only one end of the scale is fixed to a first affixation point at the guide member. The scale can also be fixed using a two-point mounting, wherein both ends of the scale are fixed to a respective first and second affixation point. Alternatively, scales can be directly glued on the guide member. Irrespective of the attachment geometry the highest precision of the CMM is only ensured at a specific calibration temperature. Owing, among other, to the different thermal expansion coefficients of the scale, the guide members and the further components of the CMM temperature deviations, particularly temperature gradient, lead to a deformation and with that a loss of precision.

Measuring the temperatures of the various components to provide input data for a compensation algorithm is known from the prior art. Among other DE 100 07 540 A1, DE 38 23 992 A1 or US 5,031,331 A discloses such temperature measurement and compensation schemes. A common weakness of said prior art systems is that the temperature measurements are limited to fixed pre-set positions. Such setups thus have limited spatial resolution. Moreover, the effect of local heat sources might be disregarded, particularly when the influence of such heat sources vary in dependence of the state of the CMM. A mechanical deformation of the CMM could also arise from outside influences. Particularly as thermal convection, conduction or radiation might cause a temperature gradient in the mechanical structure, e.g. when the doors to enter CMM zone face machining centers nearby.

A solution to at least partly mitigate the above weakness is thus required.

### OBJECT OF THE INVENTION

In view of the above circumstances, one object of the present invention is to improve the precision of a multi-axis tool positioning system, particularly for coordinate measurement and/or machine control purposes.

Another objective of the present invention is to simplify the metrology setup of said machines.

These objectives are at least partly achieved by realizing the characterizing features of the independent claims. Features, which further develop the invention in an alternative or advantageous manner are described in the dependent claims.

### SUMMARY OF THE INVENTION

A first aspect of the invention relates to a position encoder configured to provide actual displacement data of a first member of a CMM with respect to a second member of the CMM. It is clear for the skilled person that such encoders are precise enough to provide displacement data with metrology accuracy, particularly micrometer accuracy or better. The use of said encoders is not limited to CMMs. They can be used in combination with any instrument, particularly with metrology instruments or machine tools, where such precision is desirable. By way of example such encoders might be used in optical banks, precision lathes or milling machines. The word actual displacement represents the real-world relative displacement between the members, while actual displacement data represents model data regarding said displacement. Said model data is based on raw or unprocessed position sensor data. In the sense of the invention the processed model data is at least as accurate as the unprocessed position sensor data.

The encoder comprises a scale and a reader head. The reader head is configured to interact with the scale and to provide (unprocessed) displacement data based on said interaction. For reasons of consciousness many features of the invention will be illustrated by reader heads acquiring optical information regarding a portion of the scale. The applicability of the invention is however not limited to such cases, the reader head might collect magnetic, electric information, electronic codes, tactile information or any other suitable data regarding the scale. The specific features of encoders working on those principles are applicable accordingly.

The scale comprises a plurality of scale elements in a fixed arrangement. Scale elements might be embodied as specific areas having different optical properties, particularly a set of streaks or bars having different color or a pattern of scratches. Scale elements can also be embodied as specific areas with corresponding characteristic electrical or magnetic attributes. By way of example from here on many features of the scale will be illustrated with linear scales. The specific features of other scale types, e.g. scales for rotary types of encoders can be applied accordingly.

The scale is configured to be positioned on the first member in such a way that the relative displacement of the first member is determinable based on a measurement of positions of the scale elements. Particularly the scale can be affixed to the first member. Position in the sense can be "absolute" position, i.e. a position with respect to a defined, particularly calibrated, zero scale position. Position can, however, also be "relative" position, e.g. a position with respect to an arbitrary scale element.

One point fixation of the scale allows stressless thermal expansion. An advantage of this setup is the well-defined thermal expansion coefficient, a disadvantage is the low thermal inertia of the scale, thus it is more sensitive to thermal fluctuations.

If the scale is fixed on both ends, such setup is also called as pre-stressed scale, the scale follows the expansion of the underlaying first member. The expansion of the first member, as structural element, can be complex owing to the further mechanical constraints. Owing to the different thermic and mechanical behaviour the possible temperature range might be limited. The present invention is applicable with both of these and suitable alternative embodiments. The scale might be glued to the first member with its whole length. The properties of the two-end fixation and gluing are similar in the sense of the invention. Gluing includes any similar method, e.g. curing or cementing.

The reader head is configured to be positioned in a fixed spatial relationship to the second member. The reader head is configured to acquire scale position data regarding the position of at least a part of the scale elements, or in other words, it comprises a position sensor. The reader head, particularly the position sensor, needs to be positioned vs. each other in all degrees of freedom with a certain distance and tolerance of that distance. To achieve the required precision in the submicrometer range tight tolerances are required. The distance between scale-reading head might be 0.5 mm ±0.2 mm as example. The reader head might acquire movement data with respect to a given scale element or might provide position data with respect to a specified zero position. The reader head might be configured to be brought into and register a homing or calibration position to re-establish the zero position. The reader head is configured to provide the scale position data to a computing unit to derive the actual displacement data.

The inventive reader head also comprises a temperature sensor. The temperature sensor has a temperature sensor field of view associated with the scale and configured to acquire local temperature data regarding a local temperature value within the temperature sensor field of view. In some embodiments the position sensor part and the temperature sensor part of the reader head are realized as a compact reader head. The temperature sensor, however, might be placed spaced away from the position sensor. In the sense of the invention the temperature sensor is configured to be positioned in fixed spatial relationship to the second member. The temperature sensor and the position sensor are co-moving components. The skilled person understands, that owing to the deformation of the first and/or the second members as well as a play of the components a certain tolerance exist for the co-movement.

Associated with the scale in the sense of the invention means that the field of view of the temperature sensor can be correlated with a specific scale position. Associated in the sense of the invention could mean that a portion of the scale is within the temperature sensor field of view. Alternatively, however, the temperature sensor field of view might be offset from the scale with a specific distance. An advantage offsetting the temperature sensor field of view from the scale is that the acquisition of the local temperature data and the scale position data does not interfere with each other. In yet an alternative embodiment the temperature sensor is arranged far away from the scale, particularly the other side of the machine table. Especially for large components like the machine table it is advantageous to provide local temperature data in two- or three-dimensional manner for a more comprehensive derivation of the temperature and the deformation state. Comprehensive knowledge of the deformation state allows better numerical compensation, thus the strict environment conditions necessary for the required precision might be relaxed. The CMM-s can be thus placed in the factory floor enabling a more direct feedback loop for the manufacturing. Alternatively, the positional precision of the machine tools might also be improved using these embodiments of the encoder.

The local temperature value might refer to an actual temperature of a point or region of the scale. The local temperature value, particularly for pre-stressed scales, might also relate to a point or region of the first member. The local temperature data might comprise a plurality of distinct local temperature values, in particular it might be embodied as a heat map. Local temperature data, even when this referencing is not performed, is always referenceable to a given displacement and/or scale position. When advantageous the local temperature data might also be time-stamped. By way of example from here on, it is implicitly assumed that the local temperature data is spatially referenced.

The reader head is configured to provide the local temperature data to the computing unit for deriving the actual displacement data. Or in other words the inventive position encoder collects not only displacement data, but also local temperature data. Since the reader head is displaceable along the entire length of the scale temperature data with theoretically infinitesimal resolution could be collected over the entire length of the scale. Advantageously during a typical measurement process the first and second members are displaced to each other quite frequently thus the inventive encoder can provide said data inline.

The integration of the temperature sensor into reader head is also advantageous from construction and operation point of view. Namely the temperature data could be transmitted using the communication channel of the reader head, thus the amount of wiring is reduced. Moreover, as compared to the prior art praxis, no potentially sensitive temperature sensor must be placed in the path of moving components thus the robustness of the system also improves.

There are many possible realizations of the computing unit of the inventive system. Particularly the computing unit might comprise a separate tabletop sub-unit placed in the proximity of the CMM. The computing unit might comprise specific microcontrollers integrated with the encoder or the CMM and providing computing power to perform at least a part of the functionalities. The computing unit might comprise a remote server subunit, particularly a cloud computing subunit. The skilled person understands that this list is non-exclusive, and any suitable combinations or alterations are possible without changing the core aspects of the invention.

In some embodiments, the temperature sensor is configured to measure local temperature value with at least 0.5 °C precision in a temperature range of from 10 °C to 30 °C, in particular from 5 °C to 45 °C. Preferably the temperature precision is 0.1 °C or better. Owing to the construction principles of the CMM an absolute precision is preferable, i.e. the local temperature value is preferably an actual temperature. Nevertheless, embodiments of the inventive encoders with temperature sensors providing temperature differences can also be realized.

In some specific embodiments, the temperature sensor is configured to measure the local temperature value with at least 1 Hz sampling rate.

In some embodiments, the temperature sensor is embodied as an optically measuring sensor. The temperature sensor might collect a radiation emitted by a surface, e.g. as a thermal imaging camera, or a bolometer. The present invention, however, might utilize other optical phenomena, particularly a temperature dependent behavior changes of optical gratings, laser absorption and alike.

In some specific embodiments, the temperature sensor is embodied as an infrared (IR) thermometer. Preferably the IR thermometers are small size, while fulfilling the above-mentioned requirements for temperature range and accuracy. An example of such IR thermometers is the MLX90614 family IR-thermometers from Melexis, however the present invention is not limited to a specific type.

The local temperature value is provided by measuring with the optically measuring sensor, particularly with the IR thermometer, a temperature measurement region. The temperature measurement region might be located on the scale. Preferably the temperature measurement region is embodied as colored and/or matted region optimized for infrared emission. Alternatively or additionally, the temperature measurement region is located on the first member and, in particular on a holder of the scale or next to said holder. Preferably the temperature measurement region is in thermal equilibrium with the scale, thus the local temperature data is representative to the scale.

A plurality of IR thermometers, e.g. one with broader operating range, but lower accuracy and one with higher accuracy, but limited measurement range around the target temperature of the CMM, might also be used.

In some embodiments, the temperature sensor is embodied as a thermal imaging camera, particularly an infrared camera. The local temperature value is provided by measuring with the thermal imaging camera a temperature measurement region. The temperature measurement region is substantially similar to the temperature measurement region disclosed with respect to the IR thermometer. Said temperature measurement region might correspond to whole temperature sensor field of view, a preset area in the temperature sensor field of view or a dynamically selectable area. The present invention is applicable with many different sensors. Non-contact temperature sensors based on spectral or bolometric measurement principles are preferred, however temperature sensors requiring direct thermal contact such as thermoelement can also be used in the inventive reader head. Such sensors might comprise appropriate mechanical elements to bring the sensor into contact, e.g. with the scale.

In some embodiments, the local temperature data comprises a plurality of temperature values and/or a temperature gradient value. By way of example thermal imaging cameras can provide such data. Alternatively, the temperature sensor might comprise a plurality of IR thermometers in known arrangement. Alternatively or additionally, the temperature sensor might be configured to detect local hot spots. The local temperature value at hot spots can differ considerably, e.g. with more than +2°C, from the environment. Thus, neglecting or overweighting local hot spots can falsify the modeling of the deformation of the CMM. This is especially important, when the CMM is not used in metrology laboratory. Integrating a CMM functionally and spatially to the production line is desirable both for production efficiency and waste management. Moving out the CMM from labor conditions means exposure to higher temperature variations and gradients. Accurate determination of those temperature gradients and computational compensation of its effects is the only practical solution for preserving its accuracy.

In some embodiments, the reader head comprises an additional temperature sensor. The additional temperature sensor has an additional temperature sensor field of view. The additional temperature sensor field of view differs at least partially from the temperature sensor field of view. The additional temperature sensor is configured to acquire additional local temperature data regarding an additional local temperature value within the additional temperature sensor field of view. An axis defined by the temperature sensor field of view and the additional temperature sensor field of view is angled, in particular orthogonal, to an axis defined by the scale. In other words, the additional temperature sensor is configured to provide temperature data from areas spaced away from the scale, and particularly provide temperature gradient data regarding a direction orthogonal to the principal direction of the scale. Alternatively, the temperature sensor is configured to provide a temperature map, and the temperature sensor field of view and the additional temperature sensor field of view can be considered as two specific areas in said temperature map.

In some embodiments, the encoder is embodied as a linear encoder and the actual displacement is a linear displacement.

A second aspect of the invention relates to a multi-axis tool positioning system. The multi-axis tool positioning system configured to position an end-effector to a desired pose. The multi-axis tool positioning system comprises a first member, a second member, a computing unit, a driving element, a scale and a reader head. The scale and the reader head are particularly realized according to the first aspect of the invention.

The first and the second members are displaceable with respect to each other by the driving element. The scale comprises a plurality of scale elements in a fixed arrangement. The scale is configured to be positioned on the first member in such a way that an actual displacement the members is determinable based on a measurement of one or more positions of respective scale elements.

The reader head is configured (i) to be positioned in a fixed spatial relationship to the second member, (ii) to acquire scale position data regarding the position of at least a part of the scale elements, and (iii) to provide the scale position data to the computing unit for deriving actual displacement data of the members. The reader head also comprises a temperature sensor. The temperature sensor has a temperature sensor field of view associated with the scale. The temperature sensor is configured to acquire local temperature data regarding a local temperature value within the temperature sensor field of view. The reader head is configured to provide the local temperature data to the computing unit for deriving the actual displacement data.

The computing unit is configured to derive actual displacement data regarding the actual displacement of the members based on the scale position data and further based on the local temperature data. The computing unit is configured to provide operation commands for the driving element based on the actual displacement data. Actual displacement represents a real-world spatial relationship of the members, while actual displacement data is a model approximation of said displacement, e.g. for command and control or measuring purposes. The actual displacement data represents the actual displacement at least as accurate as the "unprocessed" scale position data.

The multi-axis tool positing system might be a machine tool, particularly a precision lathe, a precision drilling machine or a precision milling machine. The end-effector might be embodied as a lathe knife, a drilling head or a milling cutter. Alternatively, the end-effector might comprise both measuring and manufacturing components. The computing unit in such cases is preferably configured to derive an actual position of the end effector based a set of displacement data and provide driving commands based on the actual and desired pose of the end-effector.

In some embodiments, the scale comprises a fixed end mechanically fixed to the first member, and a free end movable independently of the first member. In particular a thermal expansion coefficient of the scale is different from a thermal expansion coefficient of the first member and the movement of the free end of the scale is caused by a different thermal expansion.

In some embodiments, the multi-axis tool positioning system is a CMM configured to provide spatial coordinate data regarding an object point on a workpiece. The end-effector comprises a measurement probe, particularly a tactile and/or optical probe. The computing unit is configured to derive a pose of the end-effector using the actual displacement data. In some particular embodiments, the CMM is embodied as a portal type CMM, or in other words as a three-axis CMM. Three-axis CMM in this sense comprises extended CMM-s, wherein the probe or the sample holder provides additional degrees of freedom.

In some embodiments of the CMM, at least one of the first or second members comprises a probe interface configured to accommodate the measurement probe. While not limited to these embodiments the present invention is particularly suited to compensate temperature related deviations of the z-axis or ram of a CMM. The ram experience different ambient conditions, as during a measurement it is partly located enclosed in the carrier, where the temperature can strongly deviate from the controlled outside conditions. Moreover, owing to its lower mass its thermal inertia is lower than the more massive components of the CMM.

In some embodiments, the CMM comprises at least one contact temperature sensor. The contact temperature sensor is configured to provide contact temperature data regarding a preset spatial location in thermal contact with a temperature calibration area of the scale. The temperature calibration area might be one of the ends of the scales, and the contact temperature sensor might be attached to the scale. In said embodiments the CMM is configured to perform a first temperature sensor verification. The first temperature sensor verification comprises (i) positioning the reader head such that the temperature sensor field of view comprises the temperature calibration area, (ii) acquiring by the temperature sensor the local temperature data regarding temperature calibration area, (iii) acquiring by the contact temperature sensor the contact temperature data, and (iv) calculating a first temperature sensor deviation based on the local temperature data and the contact temperature data. The person skilled in the art understands that any numbering or labeling only serves the purpose of legibility and that no spatial or temporal order can be derived from it. Rather the actions are to be carried out in a reasonable order, including a parallel performing of some actions. Reasonable variations in the order are within the sense of the invention.

In some specific embodiments, the first temperature sensor deviation is provided to a calibration algorithm of the temperature sensor. Or in other words, the derived deviation is provided as feedback data for adjusting the local temperature data provided by the temperature sensor. By way of example a thermal imaging camera might be calibrated in such manner.

Alternatively or additionally, the reader head, especially the temperature sensor, and the scale might be designed and positioned such to minimize the possible temperature deviations. In particular an air gap between the temperature sensor and the field of view of the temperature sensor might be minimized to reduce reflection of infrared radiation on the surface to be measured. Alternatively or additionally, the temperature sensor might specially covered, e.g. to reduce stray light. Particularly the cover might be designed such that the temperature sensor field of view is also shielded from outside radiation. The temperature sensor might measure on the guide of the scale. Said guide might be made of extruded aluminum, in particular surface treated aluminum. The surface treatment might be black anodizing, which minimize the reflectivity of that surface.

In some embodiments, the multi-axis tool positioning system, in particular the CMM, is configured to perform an axis initialization. The axis initialization comprises (i) providing a set of intermediate positions, (ii) providing a set of local temperature data associated with the respective actual displacement, and (iii) deriving spatially resolved global temperature data based on the set of local temperature data and associated with the respective actual displacement. Preferably such axis initialization might be realized as a part of an already existing homing process, i.e. when the axis initializes its one or more homing positions. Such homing movements often requires a movement of the axis across its entire working range. Therefore, performing the inventive temperature initialization would be performed with minimal, particularly no time burden.

Global temperature data in the sense of the invention represents a numerical or analytic modelling of the temperature distribution of the members. Global temperature data comprise at least information regarding the temperature distribution along the scale. The global temperature data might comprise further data, particularly regarding a two- or three-dimensional temperature distribution within the first member. The global temperature data is derived at least on the basis of the local temperature data obtained by the inventive reader head. Further input data, particularly data from fixedly positioned, more particularly contact temperature sensors, and/or temperature related constraints regarding further members of the CMM might also be provided. Finite element method, or other suitable computation methods, might be used to derive the global temperature data.

The local and global temperature data can be utilized in a supplementary manner. Particularly the global temperature data can be used to verify the plausibility of the measured local temperature data. Alternatively or additionally, when the global temperature data is derived from input data comprising high-precision contact temperature sensors it can be also be used to correct the offset and/or the drift of the temperature sensor of the reader head. Owing to such sensor fusion the accuracy and precision of the local temperature sensor can be improved beyond the nameplate capabilities of the sensor.

The intermediate positions correspond to actual displacements between a first extreme displacement and a second extreme displacement of the first and second members. In some specific embodiments, the set of intermediate positions comprises at least ten intermediate positions distributed to cover the entire scale. Particularly the intermediate positions might be distributed homogeneously over the entire scale.

In some specific embodiments, the axis initialization further comprises providing the global temperature data to a numerical simulation of the coordinate measuring machine. The numerical simulation is configured to provide displacement adjustments based on material properties of the scale and of the first and second members, particularly thermal expansion coefficient and elasticity parameters, and the global temperature data. E.g. EP 3 839 414 A1 discloses such numerical simulation configured to provide a temperature dependent modelling of the CMM.

Alternatively or additionally, the recorded values could be used not only for compensation but also for health monitoring by keeping many historical data and understand if changes are unexpected (e.g. solar irradiation) and trigger it accordingly. Moreover, the recorded values could be utilized to estimate a confidence value which helps the user to understand the actual performance of the machine is (e.g. the accuracy level one can expect) or if the machine is not in spec anymore.

In some embodiments, the multi-axis tool positioning system, in particular the CMM, is configured perform a second temperature sensor verification. The second temperature sensor verification comprises (a) accessing spatially resolved global temperature data, wherein the global temperature data represents an actual temperature distribution of the scale, (b) deriving an expected local temperature data based on the spatially resolved global temperature data, wherein the expected local temperature data is associated with the actual displacement, (c) acquiring the local temperature data associated with the actual displacement, and (d) calculating a second temperature sensor deviation based on the local temperature data and the expected local temperature. By way of example the expected local temperature data is provided by a fitting or a finite element modelling based on the previous local temperature data measurements associated with different actual displacement and the contact temperature data. The skilled person understands that a deviation between the expected and measured data can be caused by "ground truth" deviation or measurement error. Particularly the temperature sensor might have an offset. Recurring spatially localized deviations might correspond to unknown local heat sources. Temporal outliers might represent measurement artefacts. Sustained global deviation might relate to a sensor drift, which can be corrected by an appropriate calibration. Based on the nature of the deviation different types of actions can be performed.

In some specific embodiments, the second temperature sensor deviation is provided to a compensation algorithm of the temperature sensor, in particular used for determining a temperature offset of the temperature sensor. The advantage of this approach is that the temperature sensor is monitored, and its drift compensated during a measurement. In other words, this approach represents an alternative to a calibration.

Alternatively or additionally, the second temperature sensor deviation can be provided to a plausibility check functionality. The plausibility check functionality might determine whether the deviation is plausible, i.e. whether it corresponds to a tolerance range for offset and/or scattering of the temperature sensors and/or to the effect of typical local heat sources. In case of an outlier type, i.e. limited to a short time frame, implausible local temperature data the local temperature data might be neglected. In case of persistent implausible local temperature data an error message might be generated.

A third aspect of the invention relates to a method for determining actual displacement data of a first and second member of a CMM. The method is also applicable to related measurement or manufacturing instruments, particularly optical banks, tooling machines, robotic arms, precision lathes or precision milling machines.

The method comprises (a) in an actual displacement of the first and second members measuring scale position data representing a position of the second member with respect to a scale element of a scale, wherein the scale is associated with the first member, (b) measuring local temperature data regarding a local temperature value of an intermediate position, wherein the intermediate position is spaced away from both ends of the of the scale, (c) updating spatially resolved global temperature data based on the local temperature data, wherein the spatially resolved global temperature data represents an actual temperature distribution of the scale, and (d) deriving the actual displacement data based on the scale position data and the global temperature data.

In some embodiments of the method, the intermediate position corresponds to the actual displacement of the first and second members. In some specific embodiments, the measuring of the local temperature data is spatially and temporally correlated with the measuring of the scale position data.

In some embodiments, the method comprises a measuring of a plurality of local temperature data at respective intermediate positions from a set of intermediate positions of the scale. The intermediate positions are distributed to represent the whole scale. In some specific embodiments, each of the intermediate position corresponds to respective actual displacement of the first and second members.

### BRIEF DESCRIPTION OF THE DRAWINGS

By way of example only, specific embodiments of the invention will be described more fully hereinafter with reference to the accompanying figures, wherein:
Figure 1a shows schematically a prior art three-axis CMM;
Figure 1b shows schematically a prior art robot arm with linearly displaceable end-effector;
Figure 2 shows schematically a prior art setup for determining relative displacement of two members of CMM in a temperature compensated manner;
Figure 3 shows schematically an embodiment of the inventive encoder;
Figure 4a shows schematically a simultaneous measurement by the inventive temperature sensor and a contact temperature sensor;
Figure 4b depicts schematically a thermal image as an embodiment of the local temperature data;
Figure 5 illustrates, based on a flowchart, a derivation of global temperature data and modelling of the CMM;
Figure 6 illustrates, based on a flowchart, a derivation of the actual displacement data;
Figure 7 shows schematically an embodiment of the encoder with a temperature sensor and an additional temperature sensor;
Figure 8 shows an exemplary set of intermediate points with respect to a scale;
Figure 9 schematically depicts a CMM with an inventive temperature sensor and an additional temperature sensor arranged on the two sides of the table;
Figure 10 schematically depicts a second temperature verification based on a comparison with spatially resolved global temperature data.

The figures represent schematic embodiments and generally not to scale. Moreover, the relative pose of certain elements is changed for didactic purposes. Particularly elements might be offset for a better illustration of aspects of the invention.

### SPECIFIC EMBODIMENTS OF THE INVENTION

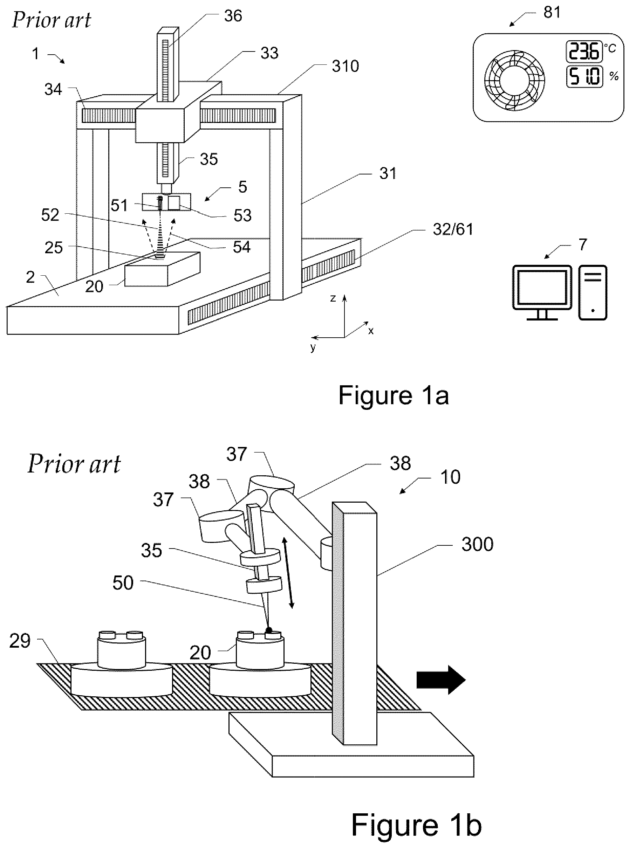

Figure 1a shows schematically a prior art three-axis CMM **1.** The CMM **1** comprises a measuring table **2** supporting a workpiece **20.** A movable frame is mounted on the measuring table **2** such that the legs **31** are movable along a first axis, depicted as the x-axis, by a first set of motors **32.** The displacement of the leg **31** is based on a position with respect to a scale **61** mounted on the measuring table **2.** The frame comprises a bar **310** rigidly mounted between the legs **31.** A carrier **33** is mounted on the bar **310** such that it is movable by a second set of motors **34** along a second axis perpendicular to the first axis, depicted as the y-axis. The probe mounting **35** is mounted on the carrier **33** such that it is movable by a third set of motors **36** along a third axis perpendicular to both the first and second axes, depicted as the z-axis. The probe **5,** as end effector, is mounted on the probe mounting **35.** The depicted probe **5** is a non-contact probe with a beam emitter **51** emitting a primary beam **52** and a receiver **53** receiving the secondary beam **54** returned from the workpiece **20,** e.g. from the object point **25.** It is clear for the skilled person, that the in Figure 1a depicted basic three-axis setup might be extended with further components providing further degrees-of-freedom, in particular rotation degrees-of-freedom. The structural elements **2,31,310,33,35** the different motors **32,34,36** as well as the probe 5 can play the roles of the first or second members in the sense of the invention. The motors **32,34,36** can also act as corresponding driving elements.

To improve the accuracy such CMMs **1** are typically installed in dedicated metrology laboratories with air conditioning **81** operating in a strict regime (e.g., ±1 °C and ±10% humidity). The different members of the CMM **1** are however acting as local heat sources. Local temperatures can thus deviate from a temperature set by the air conditioning **81.** Owing to the movement the frame the spatial relationship between the component acting as the first member and such local heat sources might change. Particularly relevant is the case of the probe mounting **35** which is often retracted to the inside of carrier **33** between the actual measurements, e.g. to enable an exchange of the workpieces **20.** The temperature inside the carrier, due to the mechanical and electrical components is however different from the one provided by the air conditioning **81.**

A computing unit **7,** schematically depicted as a tabletop compute, is placed in the proximity of the CMM **1.** Alternatively or additionally the CMM **1** might comprise microcontrollers distributed over its elements providing fully or partially the functionalities of the computing unit **7.** The computing unit **7** might also comprise additionally or alternatively remote elements, particularly cloud based elements.

Figure 1b depicts another embodiment of a multi-axis tool positioning system **10** as a robot arm. The depicted robot arm is placed next to a conveyor system **29,** wherein workpieces **20** are travelling towards a next station. The robot arm comprises a support structure **300** and a set of links **38** and joints **35,37** linking the tool **50,** as end-effector, to the support structure **300.** The tool mounting **35** is linearly displaceable to provide a fine positioning. It is clear to the skilled person that many combinations and alternatives of the depicted embodiments exist, in particular the end-effectors **5,50** can be altered without altering the further member of the systems **1,10.** The embodiments depicted in Figures 1a-b serve solely illustrative purposes. The presently claimed invention is not limited to a specific type of multi-axis tool positioning system and can be applied to any reasonable design.

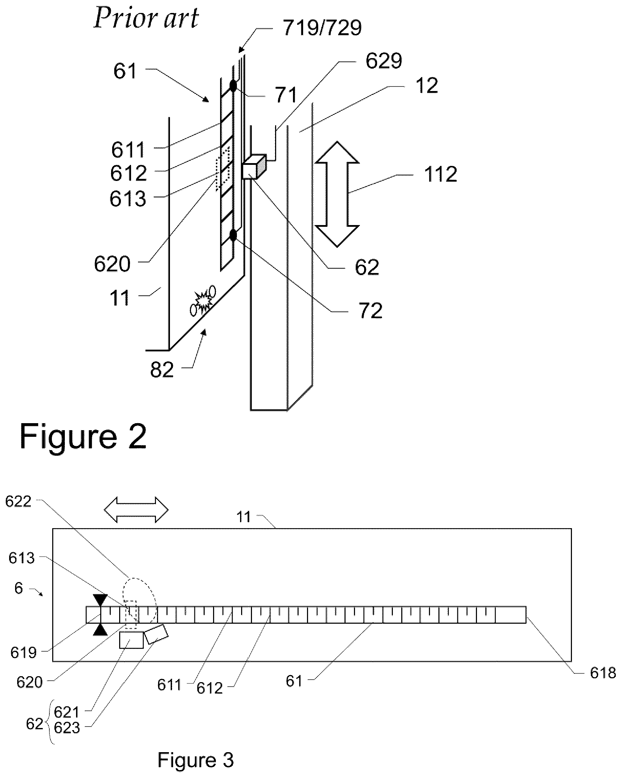

Figure 2 shows a prior art setup for determining actual displacement **112** of two members **11,12** of a CMM in a temperature compensated manner. The elements **11,12** are linearly displaceable with respect to each other by respective motors (not shown). A position encoder comprising a scale **61,** depicted as a linear scale, and a reader head **62** is arranged such that the scale **61** is positioned on the first member **11** and the reader head **62** is rigidly bound to the second member **12.** By way of example the first member **11** is the higher order member, i.e. the second member **12** is displaceable as seen from an external reference frame. Cases wherein the first member **11** is the lower order member are equally possible in the sense of the invention. The first **11** and second members **12** are defined with respect to arrangement of the scale **61** and the reader head **62.**

The scale **61** comprises a plurality of scale elements **611-613** in a fixed arrangement. The actual displacement **112** is determinable based on a measurement of one or more positions of respective scale elements **611-613.** In the depicted embodiment the reader head **62** comprises an optical sensor. The optical sensor provides a position sensor field of view **620.** The position sensor field of view **620** is such that position data regarding a scale element **613** can be acquired. Based on that the reader head **62** provides the scale position data to a computing unit (not shown) for determining the actual displacement **112** of the first member **11** with respect to the second member **12.** Data might be transferred by the corresponding wired connection **629.**

To collect temperature information regarding the scale **61** the prior art CMM comprise a set of contact temperature sensors **71,72.** Such contact temperature sensors **71,72,** however provide temperature data only at discrete points. Particularly the effect of local heat sources, such as the status LEDs **82,** might be neglected and/or overestimated depending on the spatial relationship of the contact temperature sensor **71,72** and the local heat source **82.** Moreover, due to the delicate nature of the scale **61** a direct mechanical contact between the contact temperature sensors **71,72** and the scale **61** is preferably avoided. I.e. complex modelling is required to to estimate the effective thermal distribution along the scale **61** to compensate thermal effects thereof. Furthermore, said sensor require respective wiring **719,729** in the proximity of moving equipment which complicates the manufacturing and maintenance of the CMM.

Figure 3 schematically depicts an embodiment of the inventive encoder **6** comprising a scale **61** positioned on the first member **11.** In the depicted embodiment the scale **61** comprises a fixed end **619** mechanically fixed to the first member **11,** and a free end **618** movable independently of the first member **11.** The scale **61** comprises a plurality of scale elements **611-613** in a fixed arrangement. In the depicted embodiment two different types of scale elements have been used as main **611** and auxiliary elements **612.** The invention is not limited to the type of scale elements **611-613,** particularly the invention is not limited to the application of optically identifiable scale elements.

The reader head **62** is positioned in a fixed spatial relationship to the second member (not shown), and therefore the scale **61** and the reader head **62** are displaceable to each other. The depicted reader head **62** comprises a camera **621** having a position sensor field of view **620.** The camera **621** is configured to acquire scale position data regarding the displacement of a scale element **613** within the position sensor field of view **620.** The reader head **62** also comprises a temperature sensor **623.** The temperature sensor **623** has a temperature sensor field of view **622** associated with the scale **61.** Particularly in the depicted embodiment the spatial relationship between the position sensor field of view **620** and the temperature sensor field of view **622** is fixed, more particularly calibrated. The temperature sensor **623** is configured to acquire local temperature data regarding a local temperature value within the temperature sensor field of view **622.** In other words, the reader head **62** is configured to provide spatially resolved local temperature data regarding any point within its displacement range, particularly regarding the entire scale **61.** The skilled person understands that in practical embodiments the reader head **62** is positioned such that the optical axes camera **621** and the temperature sensor **623** is close to orthogonal to the scale **61,** e.g. as shown in Figure 2. The depicted offset placement, here and in any further figures, serves transparency purposes, i.e. by enabling a clearer separation of the relevant features in this case the fields of views **620,622** and the respective sensors **621,623.**

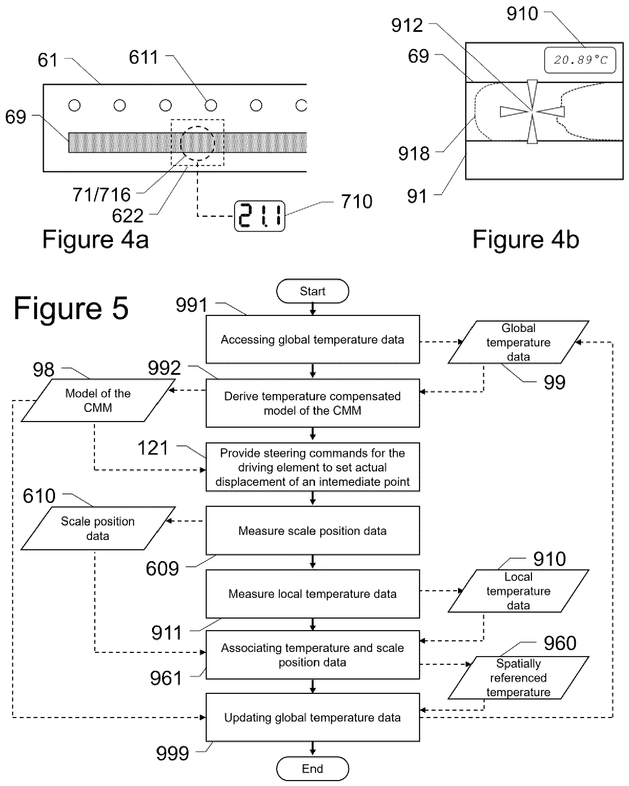

Figure 4a shows the measurement geometry for a verification of the temperature sensor, represented by the temperature sensor field of view **622,** by a contact temperature sensor **71,** i.e. a first temperature sensor verification. For reasons of conciseness the setup depicted in Figure 4a comprise many additional features not essential for said verification measurement. The skilled person understands that the depicted additional features, such as the below discussed temperature measurement region **69,** can be realized in isolation, particularly separately from the verification measurement. A reasonable combination, different from the one depicted in Figure 4a of the features is also possible.

The depicted scale **61** comprises a set of scale elements **611** in a fixed arrangement, e.g. a set of magnetic elements. A temperature measurement region **69** is located on the scale **61** in a spaced away location from the scale elements **611.** The depicted temperature measurement region **69** is optimized for infrared emission, particularly it is matted and/or blackened. In the depicted embodiment the temperature measurement region **69** is located on the scale **61,** however alternative placement is also possible. The temperature measurement region **69** might also be located on a holder/guide of the scale or on the first element (not shown).

A contact temperature sensor **71** in thermal contact with a temperature calibration area **716** of the scale **61** is shown. The temperature sensor is positioned such that the temperature sensor field of view **622** comprises the temperature calibration area **716.** The first temperature sensor verification is performed by simultaneously acquiring by the contact temperature sensor **71** the contact temperature data **710** and by temperature sensor local temperature data.

Figure 4b shows a thermal image **91** acquired regarding the temperature sensor field of view **622.** The thermal image **91** might be pixel resolved and might comprise isothermal lines **918.** I.e. a local temperature gradient is normal to said isothermal lines. The magnitude of the temperature gradient can be provided by known prior art means.

The temperature measurement region **69** can be distinguished in the thermal image **91.** Preferably the temperature sensor and/or the computing unit recognize the temperature measurement region **69** automatically. In the depicted embodiment local temperature value **910** regarding a specific location **912,** which is marked by the cross, is derived. Said location is associated with the temperature calibration area **716.** Particularly the location is determined automatically. A first temperature sensor deviation based on the local temperature value **910** and the contact temperature data **710** can be calculated and utilized to calibrate the temperature sensor. Local temperature data might refer to thermal image **91,** the local temperature value **910** or any suitable alternative.

The in Figure 4a and 4b depicted verification can be performed for non-imaging sensors, e.g. infrared thermometers with corresponding adaptations. Particularly the field of view of such sensors is preset.

Figure 5 illustrates, by a flowchart, the updating of global temperature data **99** based on a model **98** of the CMM and spatially referenced temperature **960.** Command/flow-lines show as bold and data-lines as dashed arrows. The depicted flowcharts focus on the features of the claimed invention and the actual embodiments comprise further, non-depicted elements, in particular command or data elements and/or data transfer lines. Moreover, command or data modules might be depicted in a simplified form due to reasons of clarity and conciseness. While the depicted embodiment utilizes the word update the skilled person understands that an initial global temperature data **99** and model **98** of the CMM can be provided with corresponding changes. Moreover, the skilled person also understands that the depicted method can be performed in a continuous or cyclic manner.

The model **98** of the CMM in particular comprises data regarding the kinematic and metrology links, i.e. the geometric arrangement of the members, drive elements and scale, as well as material properties of said components. Material properties particularly comprise thermal conductivity, thermal capacity, density, thermal expansion coefficient and elasticity parameters.

In a first step global temperature data **99** is accessed **991.** The global temperature data **99** might be based on initialization value, previous or current measurements. The global temperature data **99** is then utilized to establish **992** or update a numerical model **98** of the CMM. Using the model **98** steering command to set an actual displacement corresponding to an intermediate point are provided **121.** Intermediate point in the sense of the invention might be a preset calibration point but can also represent an arbitrary displacement or a motion sequence of the members of the CMM. The present invention is not limited to any one of the listed embodiments or suitable alternatives.

Scale position data **610** and local temperature data **91** is then measured **609/911** at the intermediate point. The scale position data **610** and the local temperature data **91** is the associated **961** with each other to provide spatially reference temperature data **960.** The global temperature data **99** is then updated **999** based on the spatially referenced temperature data **960** and the model **98** of the CMM. Particularly by comparing and adjusting a deviation between a value predicted by the global temperature data **99** at the scale position **610** corresponding to the intermediate position and the actual spatially reference temperature **960.**

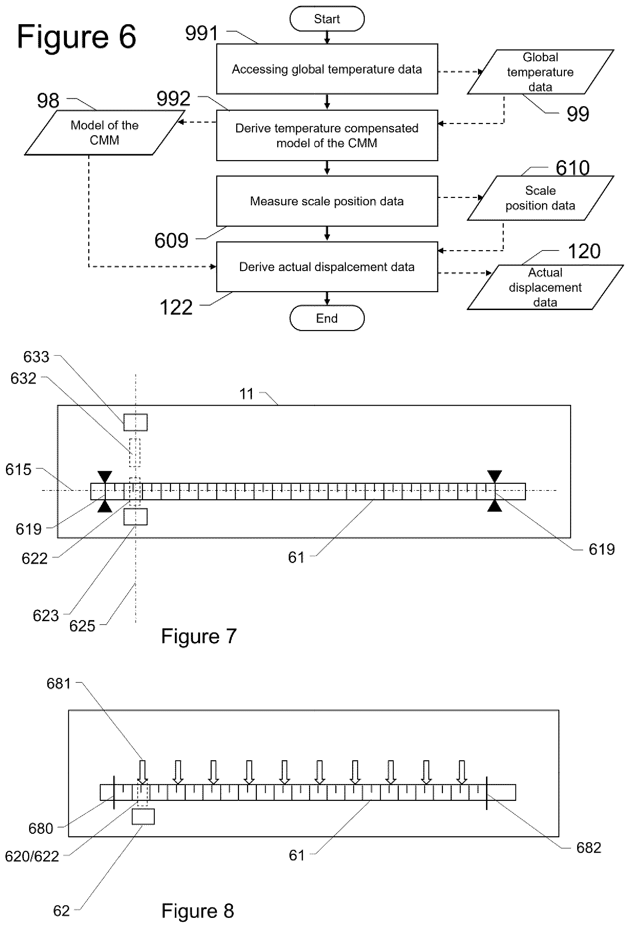

Figure 6 illustrates, based on a flowchart, an embodiment of the derivation **122** of the actual displacement data **120.** In a first step global temperature data **99** is accessed **991,** e.g. in the manner shown in Figure 5. The global temperature data **99** is then utilized to establish **992** or update a numerical model **98** of the CMM. The actual displacement data **120** is derived using the measured **609** scale position data **610** adjusted based on the model **98** of the CMM. The skilled person understands that in the practice in many cases the actual displacement data **120** is derived **122,** or in other word actualized, continuously whereas the model **98** of the CMM is derived **992,** or actualized, less frequently. The depicted algorithms of Figure 5 and 6 represents illustrative embodiments and optional features might be omitted or altered. Furthermore, additional optional steps might also be added to the algorithms.

Figure 7 illustrates an embodiment of the position encoder, where the reader head comprises a temperature sensor **623** and an additional temperature sensor **633** (only the sensors **623,633** are shown schematically). The additional temperature sensor **633** has an additional temperature sensor field of view **632.** The additional temperature sensor **633** is configured to acquire additional local temperature data regarding an additional local temperature value within the additional temperature sensor field of view **632.** By way of example the additional temperature sensor **633** is regarded to be analogous to the temperature sensor **632.** The present invention is however not limited to such embodiments. In the depicted embodiment the additional temperature sensor field of view **632** is disjunct from the temperature sensor field of view **622.** Alternative embodiments, wherein the two field of views **622,632** are partially overlapping are also possible in the sense of the invention. Moreover, the two sensors **623,633** might be realized as different sensing areas of a same physical device.

In the depicted embodiment an axis **625** defined by the temperature sensor field of view **622** and the additional temperature sensor field of view **632** is orthogonal, to an axis **615** defined by the scale **61.** In other words, owing to the additional temperature sensor **633** temperature gradient within the scale and/or in the first member orthogonal to the axis **615** of the scale **61** might also be acquired. The placement of the temperature sensors fields of views **622,632** serves didactic purposes only. The applicability of the invention is particularly not limited to orthogonal relationship of the axes **615,625** nor to a proximity of the fields of views **622,632.** On the contrary, placing the temperature sensors on the two sides of the respective members, which include the base plate also, offers benefits for more accurate modelling of the temperature distribution in the member.

Figure 8 shows schematically the geometry of a set of intermediate positions **681** selected to perform an axis initialization. The intermediate positions **681** corresponds to actual displacements, here shown as equivalent scale positions, between a first **680** and a second extreme displacement **682,** again represented by respective scale positions. By way of example the set of intermediate positions **681** comprises ten intermediate positions **681** distributed to cover the entire scale **61.** In this example the intermediate positions **681** are distributed homogeneously. The selected number and distribution are purely arbitrary. As the inventive reader head **62** is configured to provide inline temperature measurements with essentially infinite resolution a different selection intermediate positions **681** is also possible. Moreover, the geometry of the intermediate positions **681** might be varied dynamically. E.g. it is advantageous to provide a more detailed sampling in the proximity of known local heat sources and/or with respect to the typical displacement range of the members. The number of intermediate positions **681** might also be reduced to reduce the computational burden if a lower accuracy of the measurements is tolerable. Alternatively, in a preparation for very precise measurements the number of intermediate positions **681** might be increased.

The axis initialization might be performed based on the workflow of Figure 5 or a suitable alternative workflow. The reader head **62** is positioned to a given intermediate position **681** and acquires a set of local temperature data associated with the respective actual displacement. To illustrate a measurement the position sensor field of view **620** and the temperature sensor field of view **622** is plotted with respect to the intermediate position. For transparency reasons it is assumed that two fields **620,622** of view coincide. After finishing the measurement, the reader head **62** is positioned to the next intermediate position. Updated global temperature data and a model of the CMM based on said measurements might be provided as shown in Figure 5.

While Figure 8 depicts an embodiment, wherein the global temperature data and the model of the CMM is derived during an initialization phase nothing prevents dynamic modeling of the CMM based on data collected during an actual measurement or calibration step.

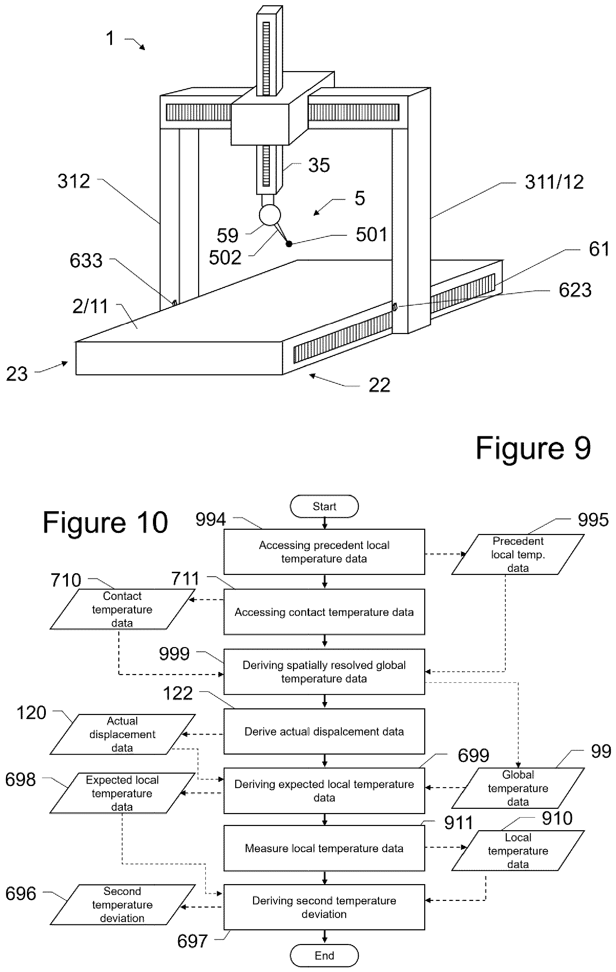

Figure 9 schematically depicts an embodiment of the inventive CMM **1** having a temperature sensor **623** and an additional temperature sensor **633.** For reasons of transparency the depicted CMM **1** has an analogous frame design as the one shown in Figure 1b. The probe **5** mounted to the probe mounting **35** is a tactile probe having tactile sensing element **501,** e.g. a ruby sphere, mounted on a stylus **502.** The depicted probe has an articulation **59,** or a wrist, which allows a deflection of the stylus **502** with respect to the probe mounting **35.**

The CMM **1** comprises a measuring table **2.** A movable frame is mounted on the measuring table **2** such that the legs **311,312** are movable along a first axis, depicted as the x-axis. The scale **61** is fixed on the measuring table **2,** thus in the sense of the invention it is the first member **11,** while the legs **311,312** constitute the second member **12.** Since the measuring table **2** is a very large piece and the legs **311,312** are mounted on both sides it is advantageous to know the temperature and the deformation state not only on the proximal side **22** mounting the scale **61** but also the distal side **23.** For that a temperature sensor **623** mounted on the leg at the proximal side **311** and an additional temperature sensor **633** is mounted on the leg at the distal side **312.**

Figure 10 schematically depicts a second temperature sensor verification by a flowchart. In the depicted embodiment the spatially resolved global temperature data **99** is derived **999** on the basis of acquired **711** contact temperature data **710** and a set of previously measured **994** local temperature data **995.** Alternative embodiments, particularly without accessing contact temperature data **710** and/or considering a set of constraints regarding the design of the multi-axis tool positioning system might also be possible. An expected local temperature data **698** is derived **699** based on the spatially resolved global temperature data **99** and the actual displacement data **120.** The expected local temperature data **698,** when corresponds to an actual displacement **120** which is not directly accessible from the spatially resolved global temperature data **99** might be provided by interpolation. The actual displacement data **120** might be provided as shown in Figure 6 or by suitable alternative manner. The second temperature deviation **696** is provided **697** on the basis of the measured **911** local temperature data **91** and the expected local temperature data **698.**

The second temperature sensor deviation **696** might be provided to a compensation algorithm of the temperature sensor, in particular utilized to determine a temperature offset of the temperature sensor. Alternatively or additionally the second temperature sensor deviation **696** might be provided to a plausibility check functionality, in particular to determine the health of the temperature sensor.

Although the invention is illustrated above, partly with reference to some specific embodiments, it must be understood that numerous modifications and combinations of different features of the embodiments can be made. All of these modifications lie within the scope of the appended claims.

## Claims

1. Position encoder (6) configured to provide actual displacement data (120) of a first member (11) of a coordinate measuring machine (1) with respect to a second member (12) of the coordinate measuring machine (1), the encoder (6) comprising a scale (61) and a reader head (62), wherein
- the scale (61)
∘ comprises a plurality of scale elements (611-613) in a fixed arrangement, and
∘ is configured to be positioned on the first member (11) in such a way that the actual displacement data (120) is determinable based on a measurement of a position of the scale elements (611-613),
- the reader head (62) is configured
∘ to be positioned in a fixed spatial relationship to the second member (12),
∘ to acquire (609) scale position data (610) regarding the displacement of at least a part of the scale elements (611-613), and
∘ to provide (161) the scale position data (610) to a computing unit (7) for deriving (122) the actual displacement data (120),
**characterized in that**
the reader head (62)
- comprises a temperature sensor (623), wherein the temperature sensor (623)
∘ has a temperature sensor field of view (622) associated with the scale (61), and
∘ is configured to acquire (911) local temperature data (91,910) regarding a local temperature value (910) within the temperature sensor field of view (622),
- is configured to provide the local temperature data (91,910) to the computing unit (7) for deriving (122) the actual displacement data (120).

2. The position encoder (6) according to claim 1, wherein the temperature
sensor (623) is configured to measure (911) local temperature value (910) with at least 0.5 °C, particularly 0.1 °C, precision in a temperature range of from 5°C to 45°C,
in particular wherein the temperature sensor (623) is configured to measure (911) the local temperature value (910) with at least 1 Hz sampling rate.

3. The position encoder (6) according to any one of claims 1 to 2, wherein
- the temperature sensor (623) is embodied an optically measuring temperature sensor, in particular as an infrared thermometer, and
- the local temperature value (910) is provided by optically measuring (911) a temperature measurement region (69), which is located
∘ on the scale (61), in particular embodied as colored and/or matted region optimized for infrared emission, or
∘ on the first member (11), in particular in local thermal equilibrium with the scale (61).

4. The position encoder (6) according to any one of the preceding claims, wherein the local temperature data (91,910) comprises a plurality of temperature values and/or a temperature gradient value.

5. The position encoder (6) according to any one of the preceding claims, wherein
- the reader head (62) comprises an additional temperature sensor (633),
- the additional temperature sensor (633) has an additional temperature sensor field of view (632), wherein the additional temperature sensor field of view (632) differs at least partially from the temperature sensor field of view (622),
- the additional temperature sensor (633) is configured to acquire additional local temperature data regarding an additional local temperature value within the additional temperature sensor field of view (632), and
- an axis (625) defined by the temperature sensor field of view (622) and the additional temperature sensor field of view (632) is angled, in particular orthogonal, to an axis (615) defined by the scale (61).

6. The position encoder (6) according to any one of the preceding claims, wherein the encoder (6) is embodied as a linear encoder and the actual displacement (112) is a linear displacement.

7. Multi-axis tool positioning system (1,10) configured to position an end-effector (5,50) to a desired pose, the multi-axis tool positioning system (1,10) comprising a first member (11), a second member (12), a computing unit (7), a driving element (32,34,36,37), a scale (61) and a reader head (62), wherein
- the first (11) and the second members (12) are displaceable with respect to each other by the driving element (32,34,36,37),
- the scale (61)
∘ comprises a plurality of scale elements (611-613) in a fixed arrangement, and
∘ is configured to be positioned on the first member (11) in such a way that an actual displacement (112) the members (11,12) is determinable based on a measurement of a position of the scale elements (611-613),
- the reader head (62) is configured
∘ to be positioned in a fixed spatial relationship to the second member (12),
∘ to acquire (609) scale position data (610) regarding the position of at least a part of the scale elements (611-613), and
∘ to provide (161) the scale position data (610) to the computing unit (7) for deriving (122) actual displacement data (120),
- the computing unit (7) is configured
∘ to derive (122) actual displacement data (120) regarding the actual displacement (112) of the members (11,12) based on the scale position data (610), and
∘ to provide (121) operation commands for the driving element (32,34,36,37) based on the actual displacement data (120),
**characterized in that**
the reader head (62)
- comprises a temperature sensor (623), wherein the temperature sensor (623)
∘ has a temperature sensor field of view (622) associated with the scale (61), and
∘ is configured to acquire (911) local temperature data (91,910) regarding a local temperature value (910) within the temperature sensor field of view (622),
- is configured to provide the local temperature data (91,910) to the computing unit (7) for deriving (122) the actual displacement data (120),
the computing unit (7) is configured to derive (122) the actual displacement data (120) further based on the local temperature data (91,910),
in particular wherein the scale (61) and the reader head (62) are comprised by an encoder (6) according to any one of claims 1 to 6.

8. The multi-axis tool positioning system (1,10) according to claim 7, wherein the scale (61) comprises a fixed end (619) mechanically fixed to the first member (11), and a free end (618) movable independently of the first member (11),
in particular wherein a thermal expansion coefficient of the scale (61) is different from a thermal expansion coefficient of the first member (11) and the movement of the free end (618) of the scale (61) is caused by a different thermal expansion.

9. The multi-axis tool positioning system (1,10) according to any one of claims 7 to 8, wherein
- the multi-axis tool positioning system (1,10) is embodied as a coordinate measuring machine (1) configured to provide spatial coordinate data regarding an object point (25) on a workpiece (20),
- the end-effector (5,50) comprises a measurement probe (5), particularly a tactile and/or an optical probe,
- the computing unit (7) is configured to derive a pose of the end-effector (5,50) using the actual displacement data (120),
in particular wherein the coordinate measuring machine (1) is embodied as a portal type coordinate measuring machine,
in particular wherein at least one of the first (11) or second members (12) comprises a probe interface configured to accommodate the measurement probe (5).

10. The coordinate measuring machine (1) according to claim 9, wherein the coordinate measuring machine (1)
- comprises at least one contact temperature sensor (71,72) configured to provide contact temperature data (710) regarding a preset spatial location in thermal contact with a temperature calibration area (716) of the scale (61), and
- is configured to perform a first temperature sensor verification, comprising
∘ positioning the reader head (62) such that the temperature sensor field of view (622) comprises the temperature calibration area (716),
∘ acquiring (911) by the temperature sensor (623) the local temperature data (91,910) regarding temperature calibration area (716),
∘ acquiring (711) by the contact temperature sensor (71,72) the contact temperature data (710), and
∘ calculating a first temperature sensor deviation based on the local temperature data (91,910) and the contact temperature data (710),
in particular wherein the first temperature sensor deviation is provided to a calibration algorithm of the temperature sensor (623).

11. The multi axis tool positioning system (1,10) according to any one of claims 7 to 10, wherein multi axis tool positioning system (1,10) is configured to perform an axis initialization comprising
- providing a set of intermediate positions (681), wherein the intermediate positions (681) correspond to actual displacements (112) between a first extreme displacement (680) and a second extreme displacement (682) of the first (11) and second members (12), in particular wherein the set of intermediate positions (681) comprises at least ten intermediate positions (681) distributed to cover the entire scale (61), more particularly wherein the intermediate positions (681) are distributed homogeneously,
- providing a set of local temperature data (91,910) associated with the respective actual displacement (112), and
- deriving (999) spatially resolved global temperature data (99) based on the set of local temperature data (91,910),
in particular wherein the axis initialization further comprises providing (992) the global temperature data (99) to a numerical simulation (98) of the multi-axis tool positioning system (1), wherein the numerical simulation (98) is configured to provide displacement adjustments based on material properties of the scale (61), particularly thermal expansion coefficient and elasticity parameters, material properties of the first (11) and second member (12), particularly thermal expansion coefficient and elasticity parameters, and the global temperature data (99),
in particular, wherein the multi-axis tool positioning system (1,10) is embodied as a CMM (1) according to any one of claims 9 to 10.

12. The multi-axis tool positioning system (1,10), according to any one of claims 7 to 11 configured to perform a second temperature sensor verification comprising
- accessing spatially resolved global temperature data (99), wherein the global temperature data (99) represents an actual temperature distribution of the scale (61),
- deriving (699) an expected local temperature data (698) based on the spatially resolved global temperature data (99), wherein the expected local temperature data (698) is associated with the actual displacement (112),
- acquiring (911) the local temperature data (91,910) associated with the actual displacement (112), and
- calculating (697) a second temperature sensor deviation (696) based on the local temperature data (91,910) and the expected local temperature (698),
in particular, wherein
- the second temperature sensor deviation (696) is provided to a compensation algorithm of the temperature sensor (623), in particular utilized to determine a temperature offset of the temperature sensor (623), and/or
- the second temperature sensor deviation (696) is provided to a plausibility check functionality,
in particular, wherein the multi-axis tool positioning system (1,10) is embodied as a CMM (1) according to any one of claims 9 to 10.

13. Method for determining (122) actual displacement data (120) of a first (11) and second member (12) of a coordinate measuring machine (1) comprising
- in an actual displacement (112) of the first (11) and second members (12) measuring (609) scale position data (610) representing a position of the second member (12) with respect to a scale element (611-613) of a scale (61), the scale (61) being associated with the first member (11),
- measuring (911) local temperature data (91,910) regarding a local temperature value (910) of an intermediate position (681), spaced away from both ends (618,619) of the of the scale (61),
- updating spatially resolved global temperature data (99) based on the local temperature data (91,910), wherein the global temperature data (99) represents an actual temperature distribution of the scale (61), and
- deriving (122) the actual displacement data (120) based on the scale position data (610) and the global temperature data (99).

14. The method according to claim 13, wherein the intermediate position (681) corresponds to the actual displacement (112) of the first (11) and second members (12), in particular wherein the measuring (911) of the local temperature data (91,910) is spatially and temporally correlated with the measuring (609) of the scale position data (610).

15. The method according to any one of claims 13 to 14 comprising a measuring (911) of a plurality of local temperature data (91,910) at respective intermediate positions (681) from a set of intermediate positions of the scale (61), the intermediate positions (681) being distributed to represent the whole scale (61), in particular wherein each of the intermediate positions (681) corresponds to respective actual displacement (112) of the first (11) and second members (12).
